# DEMANDE DE BREVET EUROPEEN

(11) **EP 1 014 521 A2**
(43) Date de publication de la demande: **28.06.2000**
(21) Numéro de dépôt: 99402791.0
(22) Date de dépôt: 09.11.1999
(51) Int. Cl.: H02B 13/055

(54) **Méthode de remplissage gazeux de lignes de transmission haute tension à isolation gazeuse et son procédé de fabrication**

(30) Priorité: 24.12.1998 FR 9816453
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Larquet, Christian, 78280 Guyancourt (FR); Dutournier, Bertrand, Les Tisserands, 76130 Mont St Aignan (FR); Brosseau, Philippe, 95430 Auvers sur Oise (FR); Dumas, Jean-Louis, Résidence Le Renouveau, 91570 Bievres (FR)
(74) Mandataire: Mellul-Bendelac, Sylvie Lisette

(57) **Abrégé**

La présente invention concerne une méthode de remplissage gazeux de lignes (20) de transport de courant électrique dites à isolation gazeuse, à l'aide d'un mélange gazeux d'isolation, ligne comportant une gaine tubulaire extérieure, au moins un conducteur interne à la gaine, et coaxial avec cette gaine, qui comporte la mise en oeuvre des étapes suivantes, appliquées à l'espace situé entre le ou les conducteurs internes et la gaine extérieure :
a) l'application au dit espace d'au moins un cycle de purge comportant :
   - une étape de pompage jusqu'à un premier niveau de vide;
   - une étape de purge par introduction d'un gaz de purge;
b) l'application au dit espace d'un cycle de remplissage comportant :
   - une étape de pompage jusqu'à un second niveau de vide;
   - une étape de remplissage à l'aide du dit gaz d'isolation.

Application à la fabrication de lignes de transport de courant électrique dites à isolation gazeuse.

## Description

La présente invention concerne le domaine des lignes de transport de courant à haute tension dites "à isolation gazeuse" (on trouve souvent dans la littérature la dénomination LIG).

On observe dans ce domaine une tendance claire à limiter l'existence et l'implantation de lignes haute tension aériennes, au profit de lignes dites à isolation gazeuse" ou encore de lignes à isolation solide, qu'il est possible d'enterrer.

On rappellera ici que la structure typique de telles lignes ou câbles de transport de courant comporte une gaine tubulaire extérieure, au moins un conducteur interne à la gaine et qui est coaxial avec cette gaine, le ou les conducteurs internes du câble étant supportés de façon isolante sur la structure interne de la gaine extérieure, l'espace situé entre conducteur(s) interne(s) et gaine extérieure étant rempli d'un mélange gazeux d'isolation.

Une littérature assez récente et abondante évoque ainsi, à titre de gaz isolants, le SF6, ou encore des mélanges gazeux à base de SF6 (SF6 dont les propriétés d'isolant électrique sur une large gamme de température sont bien connues), ainsi que les problèmes de récupération, épuration et recyclage éventuels, du SF6 utilisé dans de telles applications électrotechniques.

On citera ici à titre illustratif les documents suivants : DE-19623723, DE-3122886, DE-19503227, WO-98/23363, US-4 415 763, EP-820801, et US-4 705 914.

La littérature évoque également, à titre de mélanges gazeux d'isolation, des mélanges à base de CO₂, de CF₄, ou encore de SO₂.

On constate immédiatement à la lecture de toute cette littérature le fait que parmi les principales difficultés de cette technologie de lignes à isolation gazeuse utilisant le SF6, on trouve d'une part le fait que les pertes par fuites de SF6 doivent être selon les normes internationales extrêmement réduites (en pratique ne doivent pas excéder 1% par an du SF6 introduit), et d'autre part les difficultés liées à la maîtrise de la manipulation des gaz en jeu et de la phase de remplissage pour parvenir aux spécifications requises, notamment en terme de teneur résiduelle en oxygène et en vapeur d'eau dans l'atmosphère d'isolation interne à la ligne.

Le document WO précédemment cité propose par exemple une méthode d'élaboration d'un mélange comportant du SF6 en deux étapes, tout d'abord la fabrication d'un prémélange inhomogène, puis le stockage de ce prémélange dans une capacité tampon, au besoin en étant au préalable passé par un mélangeur statique, la capacité tampon étant alors représsurisée en continu par le fait qu'une partie du mélange issu de la capacité est comprimée et recyclée dans la capacité tampon.

On conçoit alors qu'il existe un vrai besoin pour disposer d'un procédé simple et fiable, d'élaboration de tels mélanges de gaz d'isolation à base notamment de SF6, ainsi que de méthodes améliorées de remplissage gazeux de telles lignes de transport de courant électrique à isolation gazeuse permettant d'atteindre les spécifications requises.

Un des objectifs de la présente invention est de proposer une solution aux problèmes techniques précédemment listés.

Pour ce faire, l'invention concerne une méthode de remplissage gazeux de lignes de transport de courant électrique dites à isolation gazeuse, à l'aide d'un mélange gazeux d'isolation, ligne comportant une gaine tubulaire extérieure, au moins un conducteur interne à la gaine, et coaxial avec cette gaine, méthode qui comporte la mise en oeuvre des étapes suivantes, appliquées à l'espace situé entre le ou les conducteurs internes et la gaine extérieure :
a) l'application au dit espace d'au moins un cycle de purge comportant :
   - une étape de pompage jusqu'à un premier niveau de vide;
   - une étape de purge par introduction d'un gaz de purge;
b) l'application au dit espace d'un cycle de remplissage comportant :
   - une étape de pompage jusqu'à un second niveau de vide;
   - une étape de remplissage à l'aide du dit gaz d'isolation.

La méthode de remplissage gazeux selon l'invention peut par ailleurs adopter l'une ou plusieurs des caractéristiques suivantes :
- le premier niveau de vide est inférieur à 50 mbars, et préférentiellement situé dans une gamme allant de 5 à 20 millibars;
- le second niveau de vide est inférieur à 100 mbars, et préférentiellement situé dans une gamme allant de 0,1 à 20 millibars;
- on effectue une analyse, en au moins un élément gazeux, de l'atmosphère interne à la ligne telle qu'obtenue en sortie du ou des cycles de purge;
- on effectue une analyse, en au moins un élément gazeux, de l'atmosphère interne à la ligne telle qu'obtenue en sortie de l'étape de remplissage du cycle de remplissage ;
- on effectue, en sortie de l'étape de pompage du cycle de remplissage, une mesure de pression dans la ligne.

L'invention concerne également un procédé de fabrication de lignes de transport de courant électrique dites à isolation gazeuse, lignes du type comportant une gaine tubulaire extérieure, au moins un conducteur interne à la gaine et coaxial avec cette gaine, le procédé comportant une phase de remplissage de l'espace situé entre le ou les conducteurs internes et la gaine extérieure à l'aide d'un mélange gazeux d'isolation, et se caractérisant en ce que la dite phase de remplissage est réalisée par application de la méthode de remplissage gazeux de lignes de transport de courant électrique telle que précédemment décrite.

L'invention concerne également un procédé d'élaboration d'un mélange gazeux homogène comportant du SF6 et un gaz porteur, qui se caractérise par la mise en oeuvre des mesures suivantes :
- on dispose d'une première ligne d'amenée d'un gaz primaire qui comporte du SF6;
- on dispose d'une seconde ligne d'amenée d'un gaz porteur;
- l'une des deux lignes d'amenée est équipée d'un organe de mesure de débit, tandis que l'autre ligne est alors équipée d'un organe de régulation de débit ;
- les deux lignes d'amenée sont connectées en leur partie aval à une ligne de délivrance du mélange à un point utilisateur ;
- on régule, à l'aide d'un organe régulateur de pression, situé sur la ligne de délivrance, la pression du mélange délivré par la ligne de délivrance en aval des points de connexion des lignes d'amenées.

Le procédé d'élaboration d'un mélange gazeux homogène comportant du SF6 et un gaz porteur selon l'invention peut par ailleurs comporter l'une ou plusieurs des caractéristiques suivantes :
- on dispose d'un organe de mélange dynamique, situé sur la ligne de délivrance en amont dudit organe régulateur de pression ;
- on dispose d'un organe de mélange dynamique, situé sur la ligne de délivrance entre ledit organe régulateur de pression et le point utilisateur;
- le mélangeur dynamique est constitué d'une canalisation adoptant sur tout ou partie de sa longueur, une structure non rectiligne de spires, la canalisation étant munie d'une entrée de gaz reliée à une partie amont de la ligne de délivrance et d'une sortie de gaz reliée à une partie aval de la ligne de délivrance ;
- la régulation de pression est obtenue par la présence, sur la ligne de délivrance, d'un organe choisi dans le groupe constitué d'une vanne de réglage, d'un déverseur, d'un orifice calibré, et d'un régulateur de débit.

On doit entendre par la notion de mélange "dynamique" selon l'invention le fait de réaliser dans le mélangeur une perte de charge minimum, sans zone de stagnation ou de vitesse nulle de gaz.

D'autres caractéristiques et avantages ressortiront de la description suivante, donnée uniquement à titre d'exemple, et faite en référence aux dessins annexés sur lesquels :
- la figure 1 est une représentation schématique d'une installation de remplissage gazeux de lignes de transport à isolation gazeux, incorporant une installation d'élaboration d'un mélange gazeux homogène comportant du SF6 et un gaz porteur, conforme à l'invention ;
- la figure 2 est une représentation schématique d'une installation de vidange et récupération du SF6 ou mélange comportant du SF6 précédemment introduit dans des lignes à isolation gazeuse.

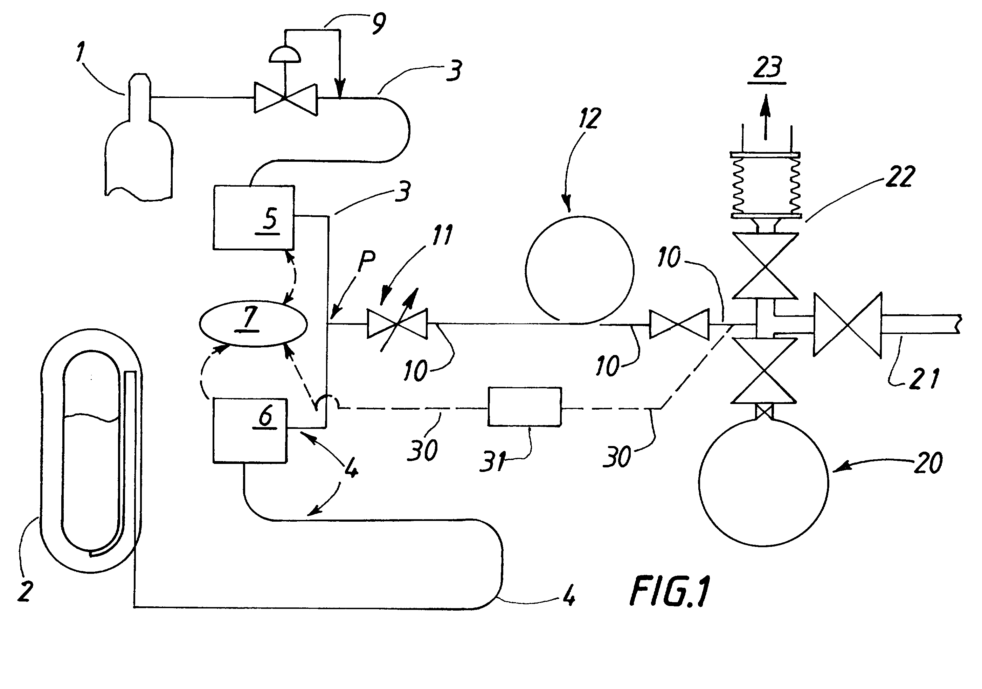

On reconnaît sur la figure 1 la présence d'une première source 1 d'un gaz primaire qui comporte du SF6, et d'une seconde source 2 d'un gaz porteur, en l'occurrence ici pour le mode de réalisation représenté un stockage d'azote liquide.

Le gaz primaire qui comporte du SF6 en provenance de la source 1 (qu'il s'agisse de SF6 pur ou encore d'un mélange comportant du SF6, par exemple un mélange de récupération provenant d'une utilisation antérieure de câbles isolés), est dirigé vers le point de mélange le long d'une ligne d'amenée 3, en passant par un détendeur 9 et par un régulateur de débit 5 (par exemple un régulateur de débit massique).

En sa partie aval, la ligne d'amenée 3 se connecte à une ligne de délivrance 10, au niveau d'un point symbolisé P sur la figure.

D'autre part, l'azote liquide en provenance de la source 2 est réchauffé sur un réchauffeur (non représenté) et le gaz en résultant conduit au point de mélange via une seconde ligne d'amenée 4, en passant par un débitmètre 6, la seconde ligne d'amenée 4 se connectant donc également en sa partie aval à la ligne de délivrance 10.

Comme il apparaîtra clairement à l'homme du métier, la configuration physique de ce point P peut être très variée, sans sortir du cadre de la présente invention, qu'il s'agisse d'un point T simple, ou bien encore à titre illustratif d'une capacité volumique.

La ligne de délivrance 10 est apte à délivrer le mélange ainsi formé au point utilisateur, c'est à dire à une ligne de transport électrique symbolisée ici en section circulaire par la référence 20.

Conformément à l'invention, la ligne de délivrance 10 est munie, en aval du point de connexion P des deux lignes d'amenée 3 et 4, d'un organe de régulation de pression amont 11, ici pour le mode de réalisation représenté une vanne de réglage de débit, ainsi que d'un mélangeur dynamique 12, constitué ici d'un ensemble de spires circulaires.

Comme déjà signalé, si la configuration illustrée ici montre un mélangeur dynamique 12 situé en aval de l'organe 11, on aurait pu également adopter selon l'invention un mélangeur dynamique 12 intercalé entre le point P et l'organe régulateur 11.

De même, si la configuration illustrée ici montre, à titre d'organe 11 « de régulation de pression », l'utilisation d'une vanne de réglage de débit, on pourrait sans sortir du cadre de la présente invention, utiliser également un régulateur de débit, dont la présence aurait on le sait également pour effet de fixer et réguler la pression entre le point P et l'organe 11.

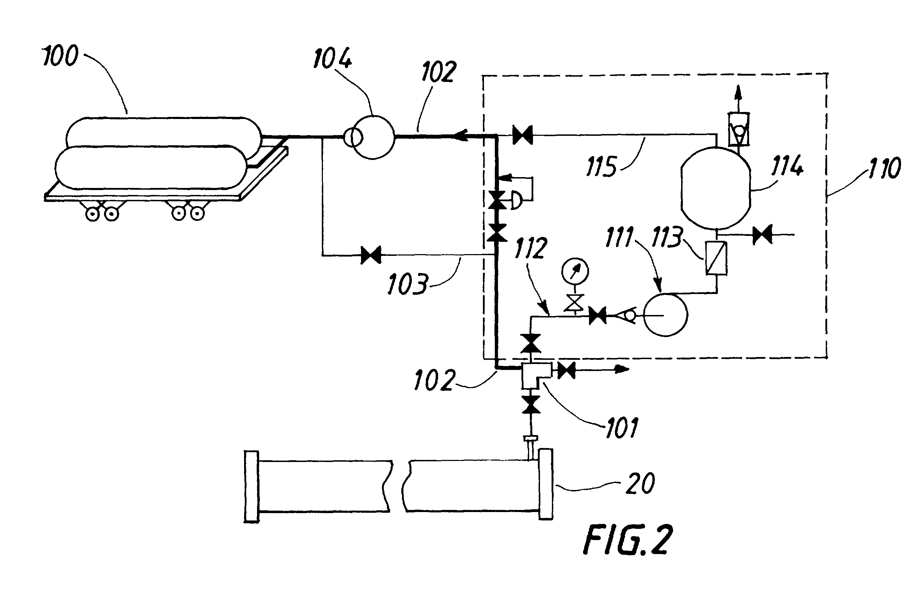

Le mélange ainsi formé et parfaitement homogénéisé est délivré au point utilisateur 20, et des moyens sont par ailleurs prévus sur l'installation pour effectuer une mise à l'air du câble (canalisation 21), ou encore effectuer un pompage de l'atmosphère introduite auparavant, via la ligne 22 connectée à une pompe à vide 23, on reviendra plus en détails dans le cadre de la figure 2 sur les moyens de pompage.

On note aussi sur la figure 1 la présence d'une unité 7 d'acquisition et de traitement de données (par exemple un automate programmable), apte non seulement à recevoir des données telles que des données d'analyse du mélange produit en un ou plusieurs composants (ligne 30 et analyseur 31 sur la figure 1), ou encore à titre illustratif des données de débit en provenance du débitmètre 6 et du régulateur du débit 5, mais également selon les besoins en débit du point utilisateur ou encore en fonction des résultats d'analyse précédemment évoqués, à rétroagir sur le régulateur de débit 5 afin de modifier les paramètres du mélange produit.

Comme on l'aura compris à la lecture de ce qui précède, l'arrangement revendiqué permet un excellent contrôle et une excellent stabilité de composition du mélange transporté et fourni au point final utilisateur, malgré la variation permanente de la pression aval au niveau de la ligne à remplir (en effet cette pression varie nécessairement en permanence du fait que l'on remplit la ligne).

Selon un mode de réalisation de l'invention, le détendeur 9, le régulateur de débit 5, la portion de ligne 3 entre détendeur 6 et régulateur 5, ainsi que la portion de ligne 3 entre le régulateur 5 et le point P, et l'organe régulateur de pression 11, sont chauffés à une température supérieure au point de liquéfaction du SF6 dans les conditions du mélange, par exemple en étant tous situés à l'intérieur d'une armoire chauffante.

Une telle mise en oeuvre sera tout particulièrement intéressante selon les conditions de pression pratiquées, notamment au niveau du point utilisateur 20.

Pour sa part, la figure 2 illustre de façon schématique, une installation de récupération et stockage du gaz d'isolation précédemment introduit dans une ligne de transport de courant. On conçoit que cette installation soit tout particulièrement adaptée pour récupérer le gaz et le stocker, en vue selon les cas de sa réutilisation, de son épuration ou encore de sa destruction, ceci intervenant après que pour une raison ou pour une autre, le câble doive être ouvert (démantèlement, incident, entretien, etc.....).

On reconnaît alors sur la figure 2, outre la présence de la ligne 20 déjà évoquée précédemment, la présence d'organes 100 de stockage (tels des cylindres) destinés à recevoir le gaz d'isolation récupéré.

Selon alors l'intervention de facteurs tels la pression du gaz dans la ligne, ou bien encore l'état d'impureté du gaz à récupérer (suite par exemple à un claquage), on utilisera l'installation de la figure 2, et en particulier son groupe de pompage 110 de la façon suivante :
- le gaz peut être, grâce à l'organe directeur 101 et du jeu de vannes présent sur chaque ligne, dirigé dans un premier temps vers les stockages 100 par la ligne 102 puis par la ligne 103 en passant par un compresseur 104;
- une fois la pression atmosphérique atteinte dans la ligne de courant, il est possible de poursuivre la récupération en faisant transiter le gaz par la ligne 112, qui est munie d'un organe de pompage 111 (pompe à vide), ainsi que d'une station d'épuration 113 (huile, poussières...), et d'une capacité 114 de stockage intermédiaire (la capacité 114 effectuant on le conçoit avantageusement la liaison entre la pompe à vide 111 et le compresseur 104.

En sortie d'une telle opération de récupération de gaz (d'ailleurs plus ou moins complète), la ligne pourra alors selon les cas être détruite, mise à l'air, ou encore purgée à l'aide d'un gaz inerte tel l'azote.

Comme on l'a vu en effet précédemment, une telle opération de récupération du gaz d'isolation initialement contenu dans la ligne 20 pour le stocker dans les réserves 100 peut intervenir à des moments très variés de la vie d'une telle ligne de transport de courant : arrêt et démantèlement de la ligne, entretien, réparation, ouverture suite à incident d'exploitation, ...

On comprendra dès lors que le gaz ainsi récupéré et stocké dans les réserves 100 pourra être selon les cas réutilisé tel que, épuré avant réutilisation (par des méthodes telles qu'adsorption, ou encore séparation membranaire, méthodes répertoriées dans la littérature citée plus haut), voire même détruit (par exemple par plasma, on se reportera également à la littérature citée plus haut).

Une installation telle que celle décrite dans le cadre de la figure 1 a été utilisée pour le remplissage gazeux d'une portion test de ligne de transport de courant haute tension (portion de l'ordre de 20 m, diamètre voisin de 0,48m), à l'aide d'un mélange d'isolation N2/SF6 à 10% volumiques de SF6, à une pression de l'ordre de 8 bars absolus (8 bars donc en sortie de la vanne de réglage 11).

La source primaire 1 comportant le SF6 était une réserve de SF6 pur (donc diphasique liquide/gaz).

La méthode de remplissage gazeux de la ligne comporte alors la mise en oeuvre des étapes suivantes, appliquées à l'espace situé entre le conducteur interne et la gaine extérieure :
a) l'application d'un cycle de purge comportant :
   - une étape de pompage, où en partant d'une pression voisine de la pression atmosphérique, on arrive à un premier niveau de vide voisin de 10 mbar, cela en environ 1/2 heure;
   - une étape de purge par introduction dans la ligne d'un azote d'origine cryogénique (teneur résiduelle en oxygène inférieure à 10 ppm, et point de rosée voisin de - 60°C), ceci à une pression voisine de 9 bars absolus, et pendant une durée d'environ 2 heures ;
   - la ligne est maintenue sous azote durant environ 1 heure;
b) l'application d'un cycle de remplissage à l'aide du gaz d'isolation, cycle comportant :
   - une étape de pompage jusqu'à un second niveau de vide voisin de 0,2 mbar, cette étape de pompage étant réalisée pendant une durée voisine de 2 heures;
   - une étape de remplissage à l'aide du mélange d'isolation à 10% de SF6 dans l'azote (8 bars absolus de pression), cette étape de remplissage se déroulant pendant une durée d'environ 7 heures.

On peut résumer les résultats observés de la façon suivante :
- on obtient en fin d'étape de purge à l'azote (cycle de purge) une teneur résiduelle en oxygène voisine de 216 ppm, et une teneur en vapeur d'eau voisine de 21,6 ppm ;
- on obtient ensuite en fin de remplissage à l'aide du gaz d'isolation une atmosphère d'isolation dans la ligne dont la teneur résiduelle en oxygène est inférieure à 20 ppm, et dont la teneur résiduelle en vapeur d'eau est inférieure à 200 ppm, en conformité avec le cahier des charges souhaité par le fabriquant de lignes de transport de courant considéré.

Il est à noter que la méthode de remplissage gazeux ainsi mise en oeuvre selon l'invention, alternant des étapes maîtrisées de pompage/purge/remplissage, se révèle incomparablement plus efficace qu'une méthode traditionnelle où l'on appliquerait une unique étape de pompage pour descendre à la pression finale souhaitée de 0,2 mbar, avant de pouvoir remplir à l'aide du gaz d'isolation, l'étape unique de pompage durant alors nécessairement plusieurs jours, compte tenu des dimensions de ligne en jeu.

On notera également qu'une méthode de remplissage conforme à l'invention, comportant des cycles similaires à ce qui est décrit ci-dessus dans le cas de la portion test de 20 mètres, a été testée sur une autre portion test de longueur voisine de 300 mètres, avec ici encore au final des performances d'atmosphères conformes au cahier des charges déjà mentionné.

## Revendications

1. Méthode de remplissage gazeux de lignes (20) de transport de courant électrique dites à isolation gazeuse, à l'aide d'un mélange gazeux d'isolation, ligne comportant une gaine tubulaire extérieure, au moins un conducteur interne à la gaine, et coaxial avec cette gaine, qui comporte la mise en oeuvre des étapes suivantes, appliquées à l'espace situé entre le ou les conducteurs internes et la gaine extérieure :
a) l'application au dit espace d'au moins un cycle de purge comportant :
- une étape de pompage jusqu'à un premier niveau de vide;
- une étape de purge par introduction d'un gaz de purge;
b) l'application au dit espace d'un cycle de remplissage comportant :
- une étape de pompage jusqu'à un second niveau de vide;
- une étape de remplissage à l'aide du dit gaz d'isolation.

2. Méthode de remplissage selon la revendication 1 caractérisée en ce que le dit premier niveau de vide est inférieur à 50 mbars, et préférentiellement situé dans une gamme allant de 5 à 20 mbars.

3. Méthode de remplissage selon la revendication 1 ou 2, caractérisée en ce que le dit second niveau de vide est inférieur à 100 mbars, et préférentiellement situé dans une gamme allant de 0,1 à 20 mbars.

4. Méthode de remplissage selon l'une des revendications 1 à 3, caractérisée en ce que l'on effectue une analyse, en au moins un élément gazeux, de l'atmosphère interne à la ligne telle qu'obtenue en sortie du ou des cycles de purge.

5. Méthode de remplissage selon l'une des revendications 1 à 4, caractérisée en ce que l'on effectue une analyse, en au moins un élément gazeux, de l'atmosphère interne à la ligne telle qu'obtenue en sortie de l'étape de remplissage du cycle de remplissage .

6. Méthode de remplissage selon l'une des revendications 1 à 5, caractérisée en ce que l'on effectue en sortie de l'étape de pompage du cycle de remplissage, une mesure de pression dans la ligne.

7. Procédé de fabrication de lignes de transport de courant électrique dites à isolation gazeuse, lignes du type comportant une gaine tubulaire extérieure, au moins un conducteur interne à la gaine, et coaxial avec cette gaine, le procédé comportant une phase de remplissage de l'espace situé entre le ou les conducteur(s) interne(s) et la gaine extérieure à l'aide d'un mélange gazeux d'isolation, caractérisé en ce que la dite phase de remplissage est réalisée par application de la méthode de remplissage telle que revendiquée selon l'une quelconque des revendications 1 à 6.

8. Procédé d'élaboration d'un mélange gazeux homogène comportant du SF6 et un gaz porteur, caractérisé par la mise en oeuvre des mesures suivantes :
- on dispose d'une première ligne (3) d'amenée d'un gaz primaire qui comporte du SF6 ;
- on dispose d'une seconde ligne (4) d'amenée d'un gaz porteur ;
- l'une des deux lignes d'amenée est équipée d'un organe (6) de mesure de débit, tandis que l'autre ligne est alors équipée d'un organe (5) de régulation de débit ;
- les deux lignes d'amenée sont connectées (P) en leur partie aval à une ligne de délivrance (10) du mélange à un point utilisateur (20) ;
- on régule, à l'aide d'un organe (11) régulateur de pression, situé sur la ligne de délivrance, la pression du mélange délivré par la ligne de délivrance audit organe régulateur de pression.

9. Procédé d'élaboration d'un mélange gazeux selon la revendication précédente, caractérisé en ce que l'on dispose d'un organe de mélange dynamique (12), situé sur la ligne de délivrance entre ledit organe régulateur de pression (11) et le point utilisateur (20).

10. Procédé d'élaboration d'un mélange gazeux selon la revendication 8, caractérisé en ce que l'on dispose d'un organe de mélange dynamique (12), situé sur la ligne de délivrance en amont dudit organe régulateur de pression.

11. Procédé d'élaboration d'un mélange gazeux selon la revendication 9 ou 10, caractérisé en ce que l'organe de mélange dynamique est constitué d'une canalisation adoptant sur tout ou partie de sa longueur une structure non rectiligne de spires, la canalisation étant munie d'une entrée de gaz reliée à une partie amont de la ligne de délivrance et d'une sortie de gaz reliée à une partie aval de la ligne de délivrance.

12. Procédé d'élaboration d'un mélange gazeux selon l'une des revendications 8 à 11, caractérisé en ce que l'on effectue ladite régulation de pression par la présence, sur la ligne de délivrance, d'une vanne de réglage, d'un orifice calibré, d'une vanne de régulation de débit, ou encore d'un déverseur.

13. Procédé d'élaboration d'un mélange gazeux selon l'une des revendications 8 à 12, caractérisé en ce que l'on effectue une analyse (30, 31) de la teneur en SF6 du mélange gazeux obtenu en aval dudit organe régulateur de pression, on effectue une comparaison (7) de la teneur ainsi mesurée avec une valeur de consigne, et en ce qu'en fonction du résultat de cette comparaison, on retroagit pour modifier si nécessaire le fonctionnement dudit organe de régulation de débit (5), afin de ramener la valeur de la teneur en SF6 du mélange gazeux produit au niveau de la valeur de consigne.

14. Procédé d'élaboration d'un mélange gazeux selon l'une des revendications 8 à 13, caractérisé en ce que ledit gaz primaire qui comporte du SF6 est à une pression située dans une gamme allant de 10 à 200 bars.

15. Procédé d'élaboration d'un mélange gazeux selon l'une des revendications 8 à 14, caractérisé en ce que l'on effectue un chauffage extérieur des éléments suivants :
- du lecteur ou régulateur de débit (5/6) situé sur ladite première ligne (3) d'amenée du gaz primaire,
- de la portion de première ligne d'amenée située entre ce lecteur ou régulateur et le point de connexion (P) de la première ligne d'amenée sur la ligne de délivrance,
- dudit organe (11) régulateur de pression, et
- de la portion de ligne de délivrance située entre ladite première ligne d'amenée et l'organe régulateur de pression.

16. Procédé d'élaboration d'un mélange gazeux selon la revendication 15, caractérisé en ce que l'on effectue ledit chauffage en plaçant lesdits éléments dans une armoire chauffante.

17. Installation d'élaboration d'un mélange gazeux homogène comportant du SF6 et un gaz porteur, comportant :
- une première ligne (3) d'amenée d'un gaz primaire qui comporte du SF6 ;
- une seconde ligne (4) d'amenée d'un gaz porteur ;
- un organe (6) de réglage de débit, qui est positionné sur l'une des deux lignes d'amenée, tandis que l'autre ligne est alors équipée d'un organe (5) de régulation de débit ;
- les deux lignes d'amenée étant connectées en leur partie aval à une ligne de délivrance (10) du mélange à un point utilisateur (20) ;
caractérisée en ce qu'elle comporte un organe (11) régulateur de pression, situé sur la ligne de délivrance, apte à réguler la pression du mélange délivré par la ligne de délivrance audit organe régulateur de pression.

18. Installation d'élaboration d'un mélange gazeux selon la revendication précédente, caractérisée en ce qu'elle comporte un organe de mélange dynamique (12), situé sur la ligne de délivrance entre ledit organe régulateur de pression (11) et le point utilisateur (20).

19. Installation d'élaboration d'un mélange gazeux selon la revendication 17, caractérisée en ce qu'elle comporte un organe de mélange dynamique (12), situé sur la ligne de délivrance en amont dudit organe régulateur de pression.

20. Installation d'élaboration d'un mélange gazeux selon la revendication 18 ou 19, caractérisée en ce que l'organe de mélange dynamique est constitué d'une canalisation adoptant sur tout ou partie de sa longueur une structure non rectiligne de spires, la canalisation étant munie d'une entrée de gaz reliée à une partie amont de la ligne de délivrance et d'une sortie de gaz reliée à une partie aval de la ligne de délivrance.

21. Installation d'élaboration d'un mélange gazeux selon l'une des revendications 17 à 20, caractérisée en ce que ledit organe régulateur de pression est constitué d'une vanne de réglage, d'un orifice calibré, ou d'un déverseur.

22. Installation d'élaboration d'un mélange gazeux selon l'une des revendications 17 à 21, caractérisée en ce que ledit gaz primaire qui comporte du SF6 est à une pression situé dans une gamme allant de 10 à 200 bars.

23. Installation d'élaboration d'un mélange gazeux selon l'une des revendications 17 à 22, caractérisée en ce qu'elle comporte des moyens de chauffage du lecteur ou régulateur de débit (5/6) situé sur ladite première ligne (3) d'amenée du gaz primaire, de la portion de première ligne d'amenée située entre ce lecteur ou régulateur et le point de connexion (P) de la première ligne d'amenée sur la ligne de délivrance, dudit organe (11) régulateur de pression, ainsi que de la portion de ligne de délivrance située entre ladite première ligne d'amenée et l'organe régulateur de pression.

24. Dispositif de fabrication de lignes de transport de courant électrique dites à isolation gazeuse, lignes du type comportant une gaine tubulaire extérieure, au moins un conducteur interne à la gaine, et coaxial avec cette gaine, la fabrication comportant une phase de remplissage de l'espace situé entre le ou les conducteur(s) interne(s) et la gaine extérieure à l'aide d'un mélange gazeux d'isolation, caractérisé en ce que le mélange gazeux d'isolation mis en oeuvre est un mélange comportant du SF6, et en ce que le dispositif de fabrication comprend une installation d'élaboration d'un mélange gazeux homogène comportant du SF6 et un gaz porteur conforme à l'une quelconque des revendications 17 à 22.

25. Dispositif de fabrication de lignes de transport de courant électrique selon la revendication 24, caractérisé en ce qu'il comprend également une installation (100, 111, 114, 100i...) de récupération et stockage du gaz d'isolation précédemment introduit dans la ligne de transport de courant, apte à récupérer le gaz et le stocker (100), en vue selon les cas de sa réutilisation, de son épuration ou encore de sa destruction.
